# FASCICULE DE BREVET EUROPEEN

(11) **EP 1 060 676 B1**
(45) Date de publication et mention de la délivrance du brevet: **13.12.2006**
(21) Numéro de dépôt: 00401726.5
(22) Date de dépôt: 16.06.2000
(51) Int. Cl.: A23L 1/325

(54) **Produit alimentaire à texture fibreuse hétérogène susceptible d'être obtenu à partir de protéines de poisson**
Nahrungsmittel mit heterogener faseriger Textur erhältlich aus Fischproteinen
Food product having a heterogeneous fibrous texture obtainable from fish proteins

(30) Priorité: 16.06.1999 FR 9907625
(43) Date de publication de la demande: 20.12.2000
(73) Titulaire: Neptune S.A., 78220 Viroflay (FR)
(72) Inventeur: Roussel, Laurence, 78220 Saint-Arnoult-en-Yvelines (FR); Parent, Véronique, 50500 Carentan (FR); Lenglin, Guillaume, 50210 Camprond (FR)
(74) Mandataire: Derambure, Christian

(56) Documents cités:
- EP-A- 0 398 315
- EP-A- 0 404 214
- GB-A- 1 518 778
- US-A- 3 863 017
- US-A- 4 362 752
- US-A- 4 584 204
- US-A- 4 666 720
- US-A- 4 937 089
- US-A- 5 549 920

## Description

L'invention concerne un produit alimentaire multitexturé à base de poisson, une préparation alimentaire multitexturée, un procédé d'obtention de ces produits.

On connaît déjà, en premier lieu, des produits à base de surimi de poisson obtenus après moulage et cuisson, tels que des analogues de queues de langoustes, de queues de crevettes, des analogues de pinces de crabes.

Ces produits analogues d'un produit de la mer, en taille et en forme, sont généralement de taille importante, d'un poids supérieur à 20 g. Les procédés de fabrication de ces produits leur confèrent une originalité de forme mais une texturation faible.

Ces produits ont une texture homogène, plutôt croquante, ou granuleuse résultant de l'adjonction de miettes de surimi.

On connaît par ailleurs en second lieu des procédés d'obtention de produits tels que des bâtonnets, scarifiés et roulés, des miettes obtenues par découpe desdits bâtonnets, des produits de type charcuterie de produits de la mer obtenus par empilement de couches successives.

Ces produits sont obtenus par scarification d'une bande de surimi gélifiée et travail de cette bande. Ces produits peuvent présenter une texture pseudo fibrée grossière, du fait de la lacération de la bande, afin de se rapprocher d'une texture de chair de crabe.

Cette texture pseudo fibrée ne peut pas être considérée comme réellement fibrée à l'image du muscle naturel de poisson ou crustacé.

Ces procédés permettent difficilement d'obtenir des formes différentes des formes classiques en bâtonnets, miettes, tranches.

On connaît également, en troisième lieu, des procédés permettant d'obtenir des produits analogues aux queues de crevette, par moulage d'un mélange de fibres plus ou moins grossières et d'une pâte de poisson.

Le document US-4 362 752 décrit un tel procédé, les fibres ayant un diamètre inférieur à 0,5 mm.

Le document US-A 396 634 décrit un tel procédé utilisant des fibres d'un diamètre compris entre 0,5 et 5 mm, de préférence entre 1 et 3 mm.

Le document US-4 584 204 décrit un tel procédé utilisant un mélange de fibres de poisson gélifiées ayant un diamètre compris entre 1 et environ 4 mm, et de fibres linéaires d'une épaisseur d'environ 0,3 à 3 mm.

Le document US- 4 666 720 décrit un procédé de fabrication d'un produit alimentaire de substitution des crevettes à partir d'un composant constitué d'une mousse de féculent et d'un composant à base de chair de poisson. Chacun de ces documents utilise des fibres d'une gamme de dimensions spécifique pour obtenir un type de structure souhaitée, pour imiter ou recréer artificiellement la chair de crustacé ou de mollusque.

L'invention a pour objet d'obtenir par mélange d'un matériau fibreux et d'un matériau pâteux, des produits ayant un différentiel de texture, qualifié de multitexture, se rapprochant de celles des muscles naturels de poissons et de crustacés, sans se substituer totalement à la texture ou à la forme des produits originels.

De plus, l'invention vise à obtenir, à partir d'une formulation donnée, une grande diversité de texture des produits multitexturés, autant dans les dimensions des fibres incorporées, que pour une large gamme de texture du matériau pâteux.

L'invention vise également à obtenir des formes de produit fini spécifiques et originales, de l'ordre de 3 à 150 g et notamment des petites formes inférieures à 20 grammes.

A cet effet, l'invention a pour objet un procédé selon la revendication 1. Selon un premier aspect, l'invention concerne un produit alimentaire à base de poisson, comprenant deux matériaux, un matériau pâteux et un matériau fibreux, le matériau pâteux étant aéré par texturation, incorporant des fibres ayant un diamètre compris entre 1 µm et 1 mm isolées ou en amas, le produit présentant une texture hétérogène et une consistance globale ferme et élastique se rapprochant des muscles de poissons ou de crustacés.

Selon un mode de réalisation, le matériau fibreux, obtenu par cuisson extrusion, forme un réseau de fibres macroscopiques, d'un diamètre de l'ordre de 0,1 mm à 1 mm, ramifiées en fibres microscopiques d'un diamètre de l'ordre de 1 µm à 0,1 mm.

Selon d'autres modes de réalisation le matériau fibreux comprend des fibres fines d'un diamètre de l'ordre de 0,1 mm à 1 mm, obtenues par réduction dimensionnelle d'une préparation à base de poisson, ou issues de fibres naturelles de produits de la mer issues d'un traitement mécanique de séparation des myotomes.

Le produit comprend plus de 30% d'ingrédients marins, notamment entre 30 et 60% d'ingrédients marins, essentiellement de chair de poisson, et 25 à 40% d'eau, et se présente en formes bidimensionnelles ou tridimensionnelles de type bandes fines, cylindres, terrine ou pain de poisson ou autres formes ludiques, le cas échéant colorées.

Les formes ont une dimension typiquement de 1 à 12 cm et un poids de 3 à 300g, et typiquement de 3 à 20g.

Selon un second aspect, l'invention a pour objet une préparation alimentaire à base de poisson incorporant un produit comprenant un matériau fibreux tel que présenté précédemment et un matériau pâteux comportant plus de 30% de chair de poisson, la préparation étant notamment de type steak de poisson, palet à base de poisson et légumes, bâtonnet fourré, quiche, tranche fine, pâte tartinable, rillettes de poisson, petites formes ludiques.

Selon un troisième aspect, l'invention a pour objet un procédé d'obtention de produits à texture hétérogène décrits précédemment comprenant les étapes suivantes :
- fabrication du matériau fibreux et du matériau pâteux ;
- mélange du matériau fibreux avec le matériaux pâteux ;
- mise en forme du mélange.

Le matériau pâteux est texturé par incorporation d'air par des technologies de type homogénéisation, émulsification, et/ou foisonnement et/ou cuttérage, avant le mélange avec le matériau fibreux, à raison de 0.5 part à 1 part d'air pour une part de matériau pâteux, pour avoir une force de gel de l'ordre de 50 à 150 g/cm², ou après le mélange avec le matériau fibreux par incorporation de 0,3 à 1 part d'air pour une part de mélange.

Selon un premier mode de réalisation, le matériau fibreux comprend des fibres en réseau ramifiées obtenues à partir de chair hachée de poisson, par un procédé de cuisson extrusion à haute température et humidité élevée, comprenant les étapes suivantes :
a. introduction de la chair de poisson dans un extrudeur à vis ;
b. transfert de la chair de l'amont vers l'aval du fourreau de l'extrudeur, la configuration des vis et la température à l'intérieur du fourreau de l'amont vers l'aval étant adaptés pour faire subir aux matières premières successivement une étape de malaxage et de chauffage de la matière jusqu'à une température de 130°C environ, puis une étape de fusion et de montée en température et en pression au-delà de 130°C, généralement entre 140 et 200°C, et entre 0 et 50 bars, de manière à obtenir la plastification de la matière transférée ;
c. extrusion, à l'extrémité aval du fourreau, de la matière obtenue après plastification, à travers une filière adaptée à texturer, à mettre en forme et à refroidir la matière, de manière à obtenir un produit présentant une texture fibrée ramifiée.

Le refroidissement de la matière extrudée se fait dans la filière jusqu'à une température de 100°C, voire moins, entre 80°C et 30°C, et comprend un premier refroidissement dans une zone non refroidie de la filière en sortie du fourreau puis un second refroidissement dans une zone refroidie de la filière.

Le matériau fibreux obtenu en sortie de filière est refroidi par douchage froid, tranché à la longueur désirée puis défibré en fibres, les fibres extrudées produites en amas étant coupées et par cutterage, hachage, laminage, pétrissage, homogénéisation, séparées de façon à pouvoir les disperser une matrice alimentaire à base de poisson.

Le mélange extrudé contient de 15 à 50% de matière sèche, notamment 25 à 40%, cette matière sèche comprenant au moins 35% de protéines totales. 25 à 100% de la matière sèche du mélange extrudé sont constitués de la matière sèche issue de poisson et/ou autres produits marins, comprenant essentiellement des protéines marines sous forme de hachis de filets de pulpes d'extraits de surimi etc., et le cas échéant d'autres extraits marins du type huile de poisson, de la poudre d'arêtes de poisson, de la poudre de carapaces de crustacés, du chitosane, du collagène de poisson.

Selon une réalisation, la matière sèche du mélange extrudé comprend, en complément de la matière sèche issue de poisson, des protéines fonctionnelles de lait, comme les protéines de lactosérum, les caséines et/ou les caséinates, ces protéines fonctionnelles de lait étant sous forme séchée et/ou concentrée.

Selon une réalisation, le mélange extrudé comprend en outre des protéines d'oeuf sous forme liquide ou pulvérulente, des matières grasses végétales ou laitières, des protéines végétales concentrées ou isolées, des farines végétales, des amidons et autres glucides complexes, des hydrocolloïdes alimentaires, des épices, des arômes ou des colorants.

Les fibres extrudées sont utilisées fraîches, ou conservées par un traitement physique de type surgélation pasteurisation ou stérilisation notamment.

Selon un second mode de réalisation, le matériau fibreux comprend des fibres fines obtenues à partir d'une préparation à base de poisson selon les étapes suivantes :
- mélange des ingrédients de la préparation à base de poisson ;
- mise en forme de la préparation à base de poisson ;
- mise en forme et cuisson de la préparation à base de poisson, permettant la gélification ;
- refroidissement ;
- réduction dimensionnelle de la préparation à base de poisson cuite de type découpe et râpage.

La préparation à base de poisson pour la fabrication des fibres fines comporte plus de 50% de chair de poisson lavée et raffinée, apte à la gélification, notamment additionnée d'agents stabilisants du type cryoprotecteurs en vue de sa conservation par congélation, et une humidité inférieure à 80%, la préparation à base de poisson étant éventuellement enrichie de gélifiants ou d'épaississants de manière à avoir une force de gel de 150 à 300 g/cm².

Selon un troisième mode de réalisation, le matériau fibreux comprend des fibres naturelles, cuites ou crues, de poisson, de crabe ou d'autres produits de la mer, obtenues par traitement mécanique de séparation utilisant typiquement un malaxeur, un cylindre rotatif équipé d'un peigne.

Avant texturation, le matériau pâteux destiné au mélange :
- comporte plus de 30% de chair de poisson lavée et raffinée, apte à la gélification, notamment additionnée d'agents stabilisants du type cryoprotecteurs en vue de sa conservation par congélation, et une humidité inférieure à 80% ;
- et est le cas échéant enrichi d'épaississants ou gélifiants à froid de manière à avoir une force de gel de 100 à 250 g/cm2 avant texturation.

Le taux d'incorporation du matériaux fibreux dans le matériau pâteux est compris entre 5 et 60% en poids, en fonction du résultat de texture désirée, et typiquement entre 10 et 60%.
Le mélange a lieu à une température comprise entre -10°C et +20°C et typiquement entre -2 et +6°C.

Les fibres peuvent être de même couleur ou de couleur différente du matériau pâteux.

Les fibres sont incorporées selon un mode statique, notamment dans un pétrin
ou une cuve de mélange, ou selon un mode dynamique, notamment dans un mélangeur en ligne.

Le matériau fibreux mélangé au matériau pâteux comprend au moins un type de fibres choisi dans le groupe comprenant les fibres en réseau ramifié, les fibres fines, les fibres naturelles.

Le caractère fondant du matériau pâteux texturé est régulé en fonction du taux de matières grasses compris entre 0 et 50%.

La pâte obtenue par mélange des fibres et du matériau pâteux alimentaire subit les étapes de :
- mise en forme, par extrusion ou par moulage, en formes bidimensionnelles
ou tridimensionnelles, ou sous forme de bande ;
- cuisson, permettant la gélification et la stabilisation de la forme du produit ;
- refroidissement.

Les formes obtenues peuvent ou non recevoir une coloration de surface, réalisées sur les formes crues et/ou après l'étape de cuisson selon un procédé de pulvérisation, de dépôt sur bande, ou d'extrusion de matériau pâteux coloré.

Selon un mode de réalisation, l'étape de cuisson comprend en combinaison une étape de cuisson micro ondes et une étape de cuisson vapeur, la cuisson micro ondes permettant essentiellement la cuisson rapide à coeur du produit de manière à obtenir une structure de type gel suffisamment stable avant refroidissement, et la cuisson vapeur permettant la cuisson essentiellement en surface sans dessèchement du produit, la cuisson micro ondes étant réalisée avant ou simultanément avec la cuisson vapeur

Les moyens de fabrication du matériau fibreux comprennent, dans le cas du premier mode de réalisation des fibres, un extrudeur à vis comportant deux vis sensiblement identiques s'engrenant l'une dans l'autre et entraînées en rotation dans un même sens de rotation ou en sens inverse à l'intérieur d'un fourreau allongé, des moyens d'alimentation disposés à une partie extrême amont du fourreau équipés d'au moins un dispositif de dosage adapté à fournir le mélange à un débit prédéterminé, une filière d'extrusion située à l'extrémité aval dudit fourreau, des moyens de traitement thermique adaptés à réguler finement la température à l'intérieur du fourreau et de la filière d'extrusion, ledit fourreau comprenant :
- une première zone d'alimentation de la formulation du produit
- une deuxième zone de malaxage, le cas échéant d'hydratation, et de chauffage de la matière jusqu'à au moins 130°C à coeur.
- au moins une troisième zone de fusion, de montée en température et en pression de la matière au-delà de 130°C, généralement entre 140 et 200°C, et entre 0 et 50 bars, selon la composition de la formule, dans laquelle se fait la plastification des protéines notamment des protéines de poisson.

La deuxième zone de malaxage et de chauffage comprend entre 2 et 5 modules, la troisième zone de fusion comprend 1 à 3 modules, le rapport entre la longueur des vis et le diamètre des vis étant compris entre environ 10 et 33, et typiquement entre 25 et 33.

La filière d'extrusion comprend une première portion non refroidie adjacente à l'extrémité aval de l'extrudeur à vis, suivie d'au moins une portion de refroidissement, correspondant respectivement à une zone d'alignement de la matière fondue et plastifiée à un état visqueux, et à une zone de changement de phase de l'état visqueux à l'état solide.

La fixation de la filière sur le fourreau se fait par au moins un et typiquement deux adaptateurs, un premier adaptateur constitué d'une ou deux perforations par la(es)quelle(s) est extrudée la matière fondue et plastifiée, et un second adaptateur situé entre le premier adaptateur et la filière d'extrusion, destiné à équilibrer les pressions et le flux de matière.

La filière d'extrusion a une forme intérieure adaptée au produit fini, sa dimension étant paramétrée pour permettre un refroidissement de la matière fondue et plastifiée jusqu'à 100°C, voire moins entre 80 et 10°C, sa surface intérieure étant d'une rugosité contrôlée également pour exercer des forces de cisaillement sur le produit au cours du refroidissement, la combinaison entre le refroidissement et les forces de cisaillement aux parois étant à l'origine de la texturation en continu de la matière refroidie pour former des fibres.

D'autres objets et avantages de l'invention apparaîtront au cours de la description qui va suivre en référence aux dessins dans lesquels :
- la figure 1 présente un produit obtenu par mélange d'un matériau pâteux et d'un matériau fibreux de type ultrafibres obtenues par cuisson extrusion selon un premier mode de réalisation ;
- la figure 2 présente des ultrafibres obtenues par cuisson extrusion selon un premier mode de réalisation, après hachage du matériau fibreux sorti de la filière d'extrusion, les ultrafibres étant destinées à être mélangées au matériau pâteux ;
- la figure 3 présente en agrandissement le produit de la figure 1, illustrant au centre un faisceau d'ultrafibres noyées dans le matériau pâteux ;
- la figure 4 présente un schéma d'installation de cuisson extrusion produisant des ultrafibres ;
- les figures 5a à 5i illustrent schématiquement des produits obtenus après mélange de matériau fibreux et de matériau pâteux puis moulage, en formes ludiques respectivement de cube, lapin, bille, coquillage, coquillage allongé, aileron, cylindre fourré, figurine de Noël, étoile ;
- les figures 6a et 6b représentent des fibres disposées en chevrons non individualisés obtenus en sortie d'extrudeur, les figures 6c et 6d présentent des chevrons individualisés manuellement ou mécaniquement ;

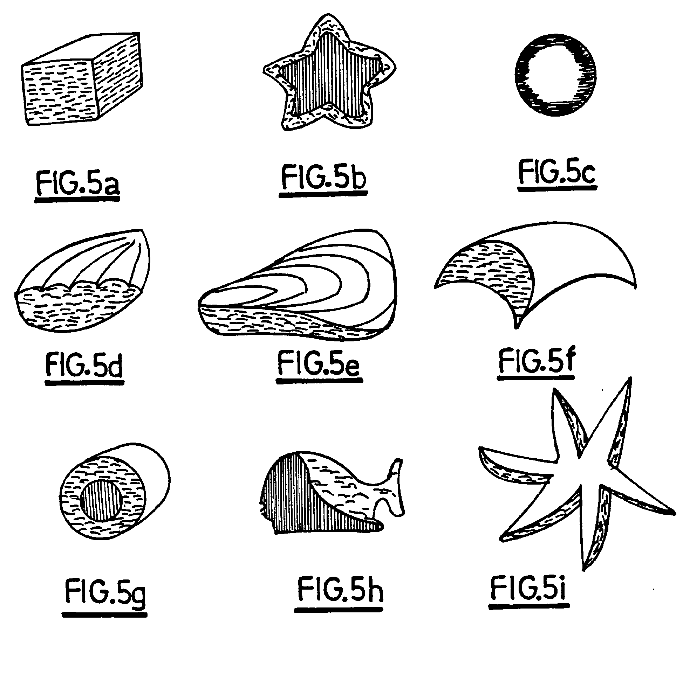

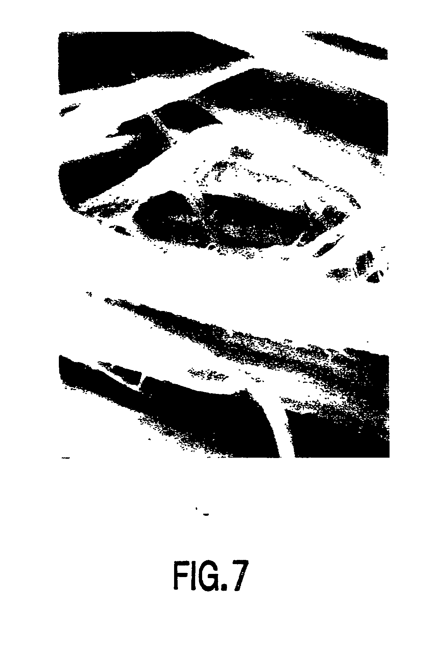

- la figure 7 présente en agrandissement un faisceau d'ultrafibres enchevêtrées.

On va décrire tout d'abord le procédé et l'installation de fabrication des fibres destinées à être mélangées à un matériau pâteux.

Selon un premier mode de réalisation, les fibres fabriquées pour le mélange, sont fabriquées par cuisson extrusion en milieu fortement hydraté et à haute température. Ces fibres présentent une structure ramifiée décrite plus précisément par la suite, et sont désignées indifféremment " ultra-fibres " ou fibres en réseau ramifiées obtenues par cuisson extrusion dans le texte.

L'installation de fabrication d'ultrafibres comprend un extrudeur à vis 1 comportant deux vis sensiblement identiques s'engrenant l'une dans l'autre et entraînées en rotation dans un même sens de rotation ou en sens inverse à l'intérieur d'un fourreau 2 allongé. Dans d'autres réalisations non décrites, l'extrudeur peut comprendre une vis pouvant être conique.

Un tel extrudeur comprend un moteur 3 destiné à entraîner en rotation les deux vis, imbriquées l'une dans l'autre, par l'intermédiaire éventuellement d'un réducteur et d'engrenages. La puissance d'entraînement peut être de 25 à 100 kW par exemple.

De préférence, ces vis sont autonettoyantes et le fourreau 2 peut être déplacé manuellement dans sa direction longitudinale pour faciliter l'accès aux vis.

Bien entendu, les matériaux utilisés pour la fabrication du fourreau 2 et des vis sont compatibles avec les aliments.

Un orifice d'alimentation 4 est disposé vers une partie extrême amont 5 du fourreau. Cet orifice d'alimentation 4 permet d'introduire des matières premières à traiter dans l'extrudeur à vis 1.

Le fourreau peut également comporter des ouvertures pour une alimentation secondaire le long du trajet des vis, par exemple une alimentation en eau.

Une filière d'extrusion 7 est située à l'extrémité aval 6 du fourreau 2. Un dispositif de découpe 8, et le cas échéant de récupération, est placé à la sortie de la filière d'extrusion.

De manière connue, cette filière d'extrusion 7 a un diamètre réduit par rapport au diamètre de l'alésage du fourreau, de manière à comprimer les matières transférées.

Pour une fabrication en continu, l'installation peut comprendre un dispositif de dosage adapté à fournir dans l'orifice d'alimentation 4 les matières premières à un débit prédéterminé.

Des moyens de chauffage 8a et de refroidissement sont adaptés à régler la température à l'intérieur du fourreau 2 et de la filière d'extrusion 7.

On décrit maintenant plus précisément la structure du fourreau 2 et le procédé d'extrusion.

On désignera par le terme «mélange» les matières premières soumises aux étapes du procédé ultérieures à l'introduction, c'est à dire l'étape de chauffage malaxage puis l'étape de fusion.

Le fourreau 2 comporte trois zones 9, 10, 11 adjacentes.

La première zone 9 est une zone d'alimentation, dans laquelle sont introduites les matières premières à extruder. C'est à ce niveau que débouche l'orifice d'alimentation 4 du mélange.

La formulation du mélange est constituée principalement de protéines de poissons et/ou autres produits de la mer : poissons, chairs de poissons, surimi, calamars, encornets, poulpes, crabes, crevettes, moules, etc. Ainsi dans tout le texte on entendra par protéines de poissons, des protéines de poissons et/ou des protéines d'autres produits de la mer. Les caractéristiques sensorielles (goût, couleur, texture, etc.) sont avant tout le résultat de la présence de ces protéines spécifiques de poissons et/ou autres produits de la mer.

Selon une réalisation, ces matières premières sont sous forme humide pâteuse crue ou cuite introduite par l'orifice d'alimentation. Une mélée homogène est réalisée à l'aide d'un cutter sous vide ou non. L'ensemble des constituants de la formulation finale des ultrafibres peut être incorporé à ce niveau et mélangé intimement. La mêlée est alors introduite et dosée dans l'extrudeur au moyen d'une pompe, d'un poussoir ou tout autre moyen équivalent. Une des réalisations intéressantes de l'invention est de mettre en oeuvre une alimentation dite fermée, c'est à dire que le fourreau de l'extrudeur est fermé hermétiquement dans la zone d'alimentation, la pompe faisant office de gaveur.

Selon une autre réalisation, ces matières premières sont sous forme d'une poudre solide introduite par l'orifice d'alimentation, additionnée d'eau. L'eau du mélange est ajoutée dans la zone d'alimentation en totalité ou en partie également dans la deuxième zone 10.

De telles poudres de produits marins sont obtenus après précipitation, concentration, filtration ou ultrafiltration et/ou séparation sur colonnes de chromatographie préparative puis séchage à l'air chaud (tunnel, atomisation, etc.), sur une surface chaude (tambour, ...) ou par lyophilisation.

Le produit fini extrudé peut être assimilé à du muscle de poisson ou crustacé, mais pas exclusivement. II peut être totalement original en forme, texture, goût et couleur et ne ressembler à aucune matière première spécifiquement. Sa forme peut ainsi être totalement variée et ludique.

Ces protéines de produits marins peuvent être sous formes natives ou modifiées (voie chimique ou enzymatique), crues ou cuites, faiblement ou fortement concentrées, conservées à l'état réfrigéré, surgelé ou séché.

Le plus fréquemment, les protéines de tels produits marins se trouvent sous forme humide, de 10 à 35 % d'extrait sec, à l'état surgelé en pains de 5 à 10 kg.

Une forme usuelle est constituée par les pulpes de poisson ou de crustacés et le surimi.

Le surimi est le résultat du lavage multiple à l'eau douce, suivi d'essorages successifs, de la chair hachée de filets de poisson afin d'éliminer les constituants protéiques solubles du muscle. Les protéines insolubles résiduelles sont stabilisées à l'état congelé par addition d'agents protecteurs, de façon standard du saccharose, du sorbitol et des polyphosphates. Dans ce cas, le surimi de poisson contient environ 25 % d'extrait sec, dont 18 % de protéines et 8 % de protecteur.

Une pulpe de poissons ou de crustacés contient d'ordinaire 15 à 20 % d'extrait sec, dont 12-15 % de protéines.

La deuxième zone 10 est une zone de malaxage, le cas échéant d'hydratation, et de chauffage du mélange jusqu'à au moins 130°C à coeur. Le mélange est transféré de l'amont vers l'aval du fourreau 2, en étant soumis à des contraintes de compression et de cisaillement, tout en étant chauffé comme cela sera décrit par la suite.

La troisième zone 11 est une zone de fusion, de montée en température et en pression de la matière au-delà de 130°C, généralement entre 140°C et 200°C, et entre 0 et 50 bars, selon la composition de la formule, notamment son humidité. La troisième zone 11 fournit un traitement thermo-mécanique suffisant pour faire fondre une majorité des composants alimentaires dans cette zone, et notamment des protéines de poisson ou produits de la mer, qui subissent une étape de plastification. Cette étape de plastification et les conséquences sur le produit final obtenu seront détaillées par la suite.

On va décrire maintenant plus précisément un mode de réalisation du fourreau 2 comportant les première 9, deuxième 10 et troisième 11 zones. Les zones comprennent au moins un module.

Chaque module est à une température déterminée préréglée. Selon les températures définies, le chauffage est plus ou moins continu et progressif. Les températures de chaque module peuvent être régulées en cours de procédé selon les matières premières introduites et les produits souhaités en fin de filière.

La première zone 9 comprend un module 12 dans lequel la température est égale à la température ambiante.

Selon une première variante, la deuxième zone 10 comprend trois modules 13, la troisième zone 11 comprend trois modules 14.

La température des modules 13 dans la deuxième zone 10 est respectivement 90, 100, 140°C, de l'amont vers l'aval du fourreau 2.

La température des modules 14 dans la troisième zone 11 est respectivement 165, 175, 175°C, de l'amont vers l'aval du fourreau 2.
Selon une deuxième variante, la deuxième zone 10 comprend cinq modules 13 permettant un chauffage progressif en cinq paliers de l'amont vers l'aval du fourreau ; et la troisième zone 11 comprend trois modules 14 comme dans la première variante de réalisation.

Selon une troisième variante de réalisation, la deuxième zone 10 ne comprend que deux modules 13, le chauffage étant ainsi moins progressif que pour les première et deuxième variantes de réalisation ; et la troisième zone 11 ne comprend qu'un module 14.

Parallèlement à la décomposition du fourreau en modules correspondant chacun à une température donnée, les vis du fourreau de décomposent en plusieurs éléments, chaque élément ayant une structure donnée, de l'amont vers l'aval, la longueur de chaque élément pouvant coïncider ou non avec la longueur d'un module.

Dans une réalisation, le diamètre D des éléments de vis est de 55,3 mm, la longueur de chaque élément est de 50 ou 100 mm. La longueur totale L des éléments de vis montés sur l'arbre de vis est de 1000 mm, soit un rapport UD de 18. Ce rapport UD varie selon le type de vis utilisé. Il est compris entre 14, dans le cas de quatre modules de 200 mm comme dans la troisième réalisation, et 33 dans le cas de neuf modules de 200 mm comme dans la deuxième réalisation. Dans le cas de sept modules il est par exemple de 25.

Selon une réalisation, le fourreau 2 de l'extrudeur 1 est constitué de cinq modules de 200 mm, dont quatre sont chauffés et/ou refroidis pour atteindre une température de consigne régulée finement.

Les éléments de vis à simple filet sont désignés par V1F (pas en mm). Les éléments de vis à double filets sont désignés par V2F (pas en mm), les éléments de vis malaxeurs sont désignés par MAL (angle en degrés), les éléments de vis à pas négatif et filet perforé sont désignés par NEG (pas en mm, nombre de filets x taille en mm).

Dans une réalisation habituelle, le profil de deux vis s'écrit sous la forme suivante :
- zone de 200 mm d'alimentation : 200 mm V2F (50 mm) ;
- zone de 400 mm de malaxage et chauffage : 100 mm V1F (50 mm) + 50 mm MAL(60°) + 100 mm V1F (33 mm) + 100 mm V1F (25 mm) + 50 mm NEG (-15 mm, 3 x 6 mm) ;
- zone de 400 mm de fusion : 300 mm V2F (33 mm) + 100 mm V2F (25 mm).

Ce profil ne constitue qu'un exemple de réalisation de l'invention, de très nombreuses autres combinaisons de profils de vis peuvent être mises en oeuvre avec ces mêmes éléments de vis ou bien avec d'autres éléments de vis de conception proche.

Dans le cas de ce profil, dans la zone de 400 mm de malaxage et de chauffage progressif, la vis présente des éléments de vis malaxeurs, et des éléments de vis V1 F de pas décroissant (50, puis 33, puis 25 mm), permettant d'obtenir une compression progressive des matières traitées.

On décrit maintenant la filière utilisée 7.

La filière 7 est constituée typiquement de plusieurs éléments de filière mis bout à bout et raccordés par des fixations mécaniques adaptées. Sa réalisation est le plus souvent en métal, notamment en acier inoxydable compatible avec le contact des aliments. Il est possible de réaliser une filière en tout autre matériau résistant à la chaleur, notamment des plastiques et résines spéciaux. Sa dimension est paramétrée pour permettre un refroidissement de la matière fondue et plastifiée, jusqu'à 100°C, voire moins par exemple jusqu'à 10°C, et de préférence entre 80 et 30°C.

La surface intérieure de la filière 7 est d'une rugosité contrôlée lors de l'usinage du métal également pour exercer des forces de cisaillement sur le produit au cours du refroidissement. La forme intérieure de la filière est adaptée au produit fini souhaité.

La combinaison du refroidissement et des forces de cisaillement aux parois est à l'origine du phénomène de texturation en continu de la matière refroidie sous forme de fibres comme décrit plus loin.

La filière est souvent conçue pour permettre une vitesse linéaire des produits sortant de l'appareil de l'ordre de 2 à 10m/min, idéalement 4-6 m/min.

La forme de section peut être ronde, ovale, rectangulaire ou variée (formes ludiques : étoile, cube, anneau, personnage, animaux, etc ...).

Dans certains cas, les forces de cisaillement aux parois et la longueur de la filière peuvent être suffisamment élevées pour freiner l'extrusion du produit sans refroidissement d'appoint à l'extérieur de la filière. Dans la plupart des cas, la filière 7 comprend un système de refroidissement de sa surface externe, par circulation d'eau froide dans une double enveloppe par exemple (eau entre 60°C et 0°C). On peut même envisager de refroidir la filière 7 par une saumure à température négative (-1 °C à -20°C), par exemple de l'eau glycollée à 30%.

Cette combinaison de la température de refroidissement de la filière 7 et des forces de cisaillement aux parois internes de la filière 7 dépend étroitement de la forme de la filière, de sa longueur, du matériau de réalisation et de son usinage et évidemment du débit de matière fondue à refroidir.

Selon une première réalisation, la filière est une filière ronde en inox 316 L brut de fraisage de 325 mm² de section de passage permettant de texturer 100 kg/heure de matière sur 8 m de longueur (8 sections de 1 m). Le refroidissement est assuré par une eau glacée à 1°C circulant à 500 litres/heure. L'humidité du mélange extrudé est de l'ordre de 72 %.

Selon une deuxième réalisation, la filière est une filière rectangulaire en inox 316 L brut de fraisage de 1200 mm² de section de passage permettant de texturer 350 kg/heure de matière sur 6 m de longueur (6 sections de 1 m). Le refroidissement est assuré par une eau tiède à 20°C circulant à 1000 litres/heure. L'humidité du mélange extrudé est de l'ordre de 62 %.

Selon une troisième réalisation, la filière est rectangulaire ou ovale d'épaisseur de l'ordre de 12 à 18 mm et de largeur de 40 à 80 mm. La température de fusion et la finition de la filière favorisent un alignement des protéines de poisson ou produits de la mer non linéaire, mais en chevrons. Cet aménagement en chevrons de la matière contribue à une forte ressemblance des ultrafibres à des muscles de poisson riche en myotomes.

Selon une quatrième réalisation à l'étape d'extrusion on fourre la matière transférée dans la filière d'un produit de fourrage introduit par un tête de coextrusion débouchant dans a filière. On peut obtenir le produit de fourrage par un procédé d'extrusion.

La filière 7 comprend une première portion 15, non refroidie, prolongeant l'extrémité aval de la zone de fusion 11, et au moins une deuxième portion refroidie 16 à l'aide du dispositif ci-dessus. La température du produit en sortie de filière est de 30 à 80°C suivant la rigidité souhaitée.

Dans la première réalisation par exemple, la portion refroidie 15 a une longueur de 2 mètres.

Selon un mode de réalisation, l'installation comporte entre l'extrémité aval 6 de la zone de fusion 11, et la filière d'extrusion 7, un premier adaptateur.

Ce premier adaptateur est généralement constitué d'une (ou deux) perforation(s) centrale(s) par laquelle est extrudée la matière fondue et plastifiée. S'il y a deux perforations, celles-ci peuvent converger en une seule sortie. Si la filière d'extrusion est de petit diamètre, les perforations sont généralement coniques. Le premier adaptateur comporte souvent deux perforations latérales dans lesquelles viennent se fixer une sonde de mesure de la température de fusion Tf et une sonde de mesure de la pression P. La sortie du premier adaptateur peut être ronde, ovale, carrée, rectangulaire ou de la forme intérieure exacte de la filière d'extrusion (celle-ci pouvant être de forme ludique...).

Selon une réalisation, l'extrudeur comprend, outre le premier adaptateur, un second adaptateur entre le premier adaptateur et la filière d'extrusion.

Ce second adaptateur peut être de forme intérieure variée selon la forme intérieure du premier adaptateur et celle de la filière d'extrusion. Il peut comporter une plaque de diffusion constituée de plusieurs dizaines de perforations de petites tailles permettant de diviser le flux de matière fondue et plastifiée.

Généralement, on s'arrange pour que la surface totale des perforations de la plaque de diffusion constitue une restriction de l'ordre de 10 à 50 % par rapport à la section de passage dans la filière d'extrusion.

Selon une réalisation, une pompe d'extrusion est insérée entre le premier ou le deuxième adaptateur et la filière, destinée à réaliser une poussée régulière dans la filière pour une meilleure stabilisation de l'écoulement. Il s'agit souvent d'une pompe à engrenages, son corps peut lui même être réchauffé par des résistances électriques pour maintenir la masse fondue et plastifiée à la température requise.

De plus, plusieurs filières de refroidissement peuvent être disposées parallèlement en sortie du fourreau à vis. Dans ce cas, un adaptateur spécifique disposé avant les filières permet la répartition homogène de la matière fondue dans chaque filière.

On décrit maintenant l'impact du traitement thermo-mécanique dans l'extrudeur sur les produits obtenus en sortie de filière.

Grâce aux températures élevées utilisées dans la zone de fusion, les composants thermo-coagulables du mélange subissent une plastification. On entend par protéines thermo-coagulables des protéines telles que des protéines de muscle de poisson ou crustacés, le blanc d'oeuf, des globulines de matière végétale comme le soja, les protéines de blé, des protéines de lactosérum, par opposition à des protéines de type fluidifiantes telles que le collagène ou des caséines de lait.

Cet état de plastification est atteint à des températures de l'ordre de 130 à 180°C, généralement autour de 145-160°C, ceci pour des humidités en cours d'extrusion de l'ordre de 50 à 85 %, généralement entre 60 et 80 %, et des taux de matière grasse sur matière sèche en cours d'extrusion de l'ordre de 0 à 40%, généralement entre 2 et 20 %.

Les forces de cisaillement entraînent a priori un réchauffement par friction. La pression dans l'extrudeur n'influencerait pas les interactions moléculaires, notamment entre protéines, mais permettrait d'atteindre des températures élevées de 140-200°C sans ébullition ou formation de vapeur. La pression faciliterait, combinée à la température, le départ de l'air du mélange.

Le passage par cet état de plastification des protéines thermo-coagulables confère au mélange transféré dans le fourreau une viscosité originale, difficile à caractériser en ligne du fait du système sous pression, vraisemblablement de l'ordre de 1000 à 500 000 centipoises, propre à lui donner une texture spécifique lors du refroidissement dans la filière.

On suppose que la texture du mélange passe d'un état relativement liquide (1000 à 10 000 centipoises), dans la zone de fusion 11, à un état plus visqueux (100 000 à 500 000 centipoises) dans la zone non refroidie 15 de la filière 7, zone non refroidie dans laquelle se ferait l'alignement progressif du mélange en fibres, puis enfin, à un état solide dans la zone refroidie 16 de la filière, zone refroidie dans laquelle des fibres orientées à l'état solide se forment définitivement.

Lors de la plastification, les protéines ont leur structure modifiée, une nouvelle structure se constituant sous l'action conjuguée du refroidissement et des forces de cisaillement dans la filière.

Les constituants du mélange, notamment les protéines, se réarrangent sous forme d'une structure macroscopique et microscopique orientée, constituée de couches superposées ou de fibres alignées disposées en chevrons ou enchevêtrées.

On va maintenant décrire les produits obtenus 17 par le procédé décrit précédemment.

En sortie de filière 7, le produit obtenu 17 avant un éventuel traitement ultérieur, par exemple de découpe, hachage, se présente sous la forme d'un boudin 18, par exemple cylindrique et de diamètre voisin du diamètre de la filière dans le cas d'une filière de section circulaire, produit en continu pour un procédé en continu.

Ce boudin 18 comprend un ensemble de fibres qui peuvent être séparées, par exemple manuellement, par paquet de fibres, voire individualisées.

Les fibres ont typiquement un diamètre fonction des matières premières utilisées, du profil de vis, du profil thermique dans le fourreau et de la filière et de la structure de la filière de l'extrudeur. Les faisceaux de fibres extrudées peuvent présenter une structure en chevrons présente dans les myotomes, s'apparentant à de la chair de poisson.

Avant traitement de type défibration, la longueur des fibres peut être élevée, de l'ordre de plusieurs centimètres, par exemple 4 ou 5 centimètres. Mais des fibres individualisées de 30 cm ont déjà été produites selon cette invention.

L'observation à fort grossissement par exemple 50 fois du produit 17 révèle que cette structure fibrée du produit visible à l'échelle macroscopique se retrouve à l'échelle microscopique. Cette structure s'apparente à une structure de type fractale, auto-reproduite, c'est à dire que les ramifications des fibres semblent non finies à l'image d'un réseau hydrographique. Les ramifications s'étendent vers l'infiniment petit : la même structure ramifiée est aperçue à chaque niveau de grossissement. Cette structure extrêmement finement fibrée s'apparente également à celle des muscles striés squelettiques de mammifères ou de poissons, constituée en cascades de filaments, microfilaments et fibrilles. On qualifie ces fibres d'"ultrafibres" du fait de leur caractère extrêmement fin.

Les amas de fibres les plus gros ont couramment des dimensions au moins de 5 à 20 cm de long et un diamètre de 0.5 à 2 mm, voire de l'ordre du cm pour des filières de 20 à 30 cm de diamètre.

Les fibres associées peuvent être très petites, jusqu'à la limite de la perception visuelle, c'est à dire une dimension de l'ordre de 1 à 2 mm de long pour un diamètre de 0.02 à 0.1 mm.

On présume que ce réseau de fibres se décompose jusqu'à l'échelle moléculaire.

L'homme du métier sait que la perception sensorielle humaine est telle que les dimensions de l'ordre de 10 µm sont détectées en bouche.

Selon la composition du mélange initial introduit dans l'extrudeur, et les conditions de fonctionnement de l'extrudeur, notamment les températures et les pressions utilisées, une large gamme de textures orientées est obtenue. A titre d'exemple, un alignement macroscopique imparfait en chevrons peut-être obtenu selon certaines conditions de formulation et de refroidissement en filière. Ces chevrons ne sont visibles cette fois qu'à l'échelle macroscopique, leur dimension pouvant varier de 0,5 à 20 cm de long. Leur arrangement microscopique est équivalent aux ultrafibres précédentes, c'est à dire plutôt aligné ou enchevêtré. Ces chevrons sont en fait le résultat du profil de vitesse et de température du produit fini dans la filière au moment de la solidification de la matière protéique. Ces chevrons peuvent tout à fait être individualisés manuellement ou par un procédé mécanique adapté à la sortie de la filière.

Cette structure fibrée conduit à des propriétés rhéologiques et organoleptiques spécifiques du produit et de ses dérivés, difficiles à caractériser de façon instrumentale. A titre d'exemple, le coefficient de relaxation, indicateur d'élasticité, d'un échantillon cylindrique d'ultrafibres de 32 mm de diamètre et 25 mm d'épaisseur, obtenu par compression/relaxation de l'échantillon pendant 5 min à 15% avec un appareil Instron muni d'une sonde plate de 75 mm de diamètre, se situe entre 60 et 90%, c'est à dire proche des composés viscoélastiques de type synthétique (caoutchouc : 100%).

La composition du mélange conduisant aux ultrafibres peut être par exemple la suivante.

### Exemple 1 :

- chair de poisson 93% ;
- blanc d'oeuf en poudre 5% ;
- amidon de blé 1% ;
- sel 1% ;
pour une humidité de 78%.

### Exemple 2 :

- chair de crabe 5% ;
- chair de poisson 45% ;
- eau 29% ;
- protéines de lactosérum 8% ;
- autres protéines de lait 3% ;
- amidon 5% ;
- matières grasses 4% ;
- sel 1%.

La fermeté de l'échantillon dépend essentiellement de sa teneur en eau, ce qui n'est pas le cas de son élasticité.

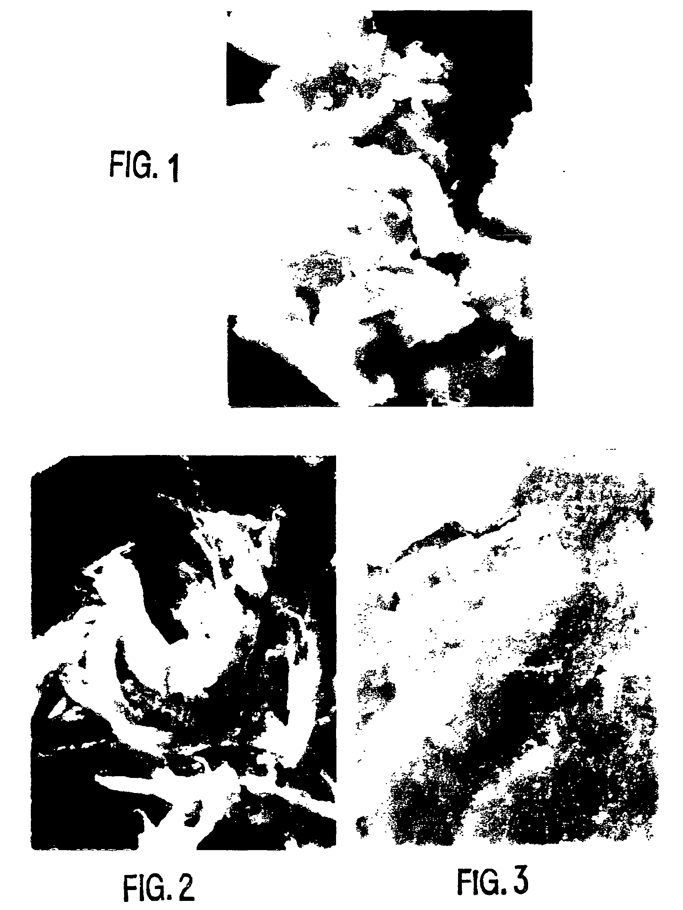

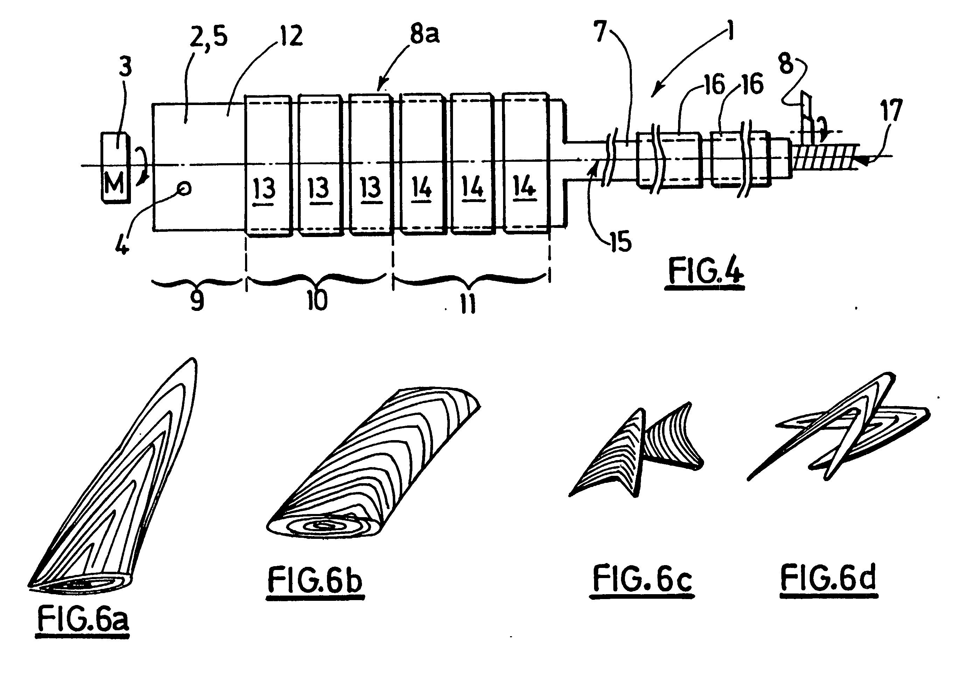

Les figures 1 et 3 illustrent le produit extrudé à structure fibreuse alignée ou enchevêtrée. La figure 6 illustre l'orientation en chevrons quelquefois recherchée.

Le produit en sortie de filière subit un traitement permettant d'obtenir les ultrafibres à incorporer au matériau alimentaire : refroidissement, tranchage, défibration, individualisation.

Les ultrafibres sont éventuellement mélangées, avant le mélange avec le matériau pâteux, avec une pâte alimentaire telle que de la chair de poisson, de la pulpe, de l'huile ou une autre matière grasse. Les ultrafibres peuvent être conditionnées en sacs étanches et ainsi devenir un produit semi-fini industriel.

Ces ultrafibres peuvent être séchées, surgelées, stérilisées ou subir un autre traitement physique de conservation, ce qui conforte leur usage en produit semi-fini à usage industriel.

On décrit maintenant un second mode de réalisation de l'invention, permettant de fabriquer des fibres fines cuites, d'un diamètre supérieur à 0.1 mm environ, obtenues par réduction dimensionnelle.

Le procédé d'obtention des fibres fines comprend les étapes suivantes : constitution d'un mélange initial, mise en forme, cuisson, refroidissement, découpe, râpage.

Selon une variante, les fibres fines sont obtenues à partir d'une pâte de poisson comprenant : 80 % de chair de poisson, 7 % d'amidon, 7 % d'eau, 3 % de sel, 3 % d'arôme. Cette pâte est mise en forme entre 1 et 4 °C dans un emballage étanche qui détermine sa forme, tel qu'un boyau de 50 à 80 cm de long sur 10 à 15 cm de diamètre, un sac rétractable, une barquette ou un moule plastique.

Cette pâte est cuite dans son emballage étanche entre 80 et 95°C pendant 1 heure à 1,5 heure, puis stocké à -20°C en attente d'utilisation. Le produit subit ensuite un tempérage entre 0 et -10°C avant de subir une réduction dimensionnelle permettant d'obtenir des fibres de diamètre inférieur à 1 mm et de 0,5 à 5 cm de long.

Selon une autre variante, les fibres fines sont obtenues à partir d'une pâte de poisson comprenant par exemple : 60 % de chair de poisson, 19 % d'eau, 10 % de matières grasses végétales, 1.5 % de sel, 1 % d'arôme, 7 % d'amidon et 1.5% de gélifiant. Cette pâte est ensuite extrudée en bande épaisse de l'ordre de 5 à 20 mm puis cuite à 80-90°C 10 à 20 minutes. Cette bande est alors refroidie en continu jusqu'à obtenir une température à coeur inférieure à -5°C, puis découpée en cubes de dimension de 5 à 15 cm. Le produit subit ensuite une réduction dimensionnelle permettant d'obtenir des fibres fines de diamètre inférieur à 1 mm et de 0,5 à 5 cm de long.

On décrit maintenant un troisième mode d'obtention des fibres selon lequel les fibres utilisées pour le mélange avec le matériau pâteux sont des fibres naturelles cuites ou crues, telles que des miettes naturelles de chair de poisson, de crabe, ou d'autres produits de la mer, obtenues par séparation mécanique de myotomes. Les fibres sont plus ou moins dissociées, de taille plus ou moins longue.

La matière première utilisée pour obtenir ces fibres est typiquement choisie dans les catégories suivantes :
- filets de poisson ou morceaux ou chutes de filetage / parage.
- poissons gras ou maigres
- poissons blanc ou rose ou à peau bleue (Hoki, Lieu noir, Colin, Merlan, Merlu ..., Saumon, Truite, Thon, Maquereau...)
- poissons frais ou congelés - natures ou fumés.

La matière première peut subir un malaxage avec sel, colorant, stabilisants de texture (polyphosphates, amidons, gélifiants...). Elle subit généralement une cuisson des filets de préférence en sac plastique sous vide, la cuisson permettant la meilleure séparation des myotomes. Tout autre traitement de cuisson est utilisable, tel qu'une cuisson sous haute pression. Dans une réalisation, le barème de cuisson utilisé en autoclave sous contre pression de 0,5 bars est de 1 heure à 80°C (température de consigne).

Les myotomes subissent ensuite un traitement mécanique de séparation, par exemple :
- introduction d'une quantité de 80 Kg dans un cylindre plus ou moins allongé, 1,2 m de longueur pour 70cm à 1 m de diamètre par exemple, équipé d'une pale et d'un peigne dont la longueur et la disposition des dents définissent la qualité de la fibre
- rotation 10 à 15 T/min du cylindre inverse du peigne (800 à 1200 T/min), pendant un temps variable selon les espèces de poisson et la qualité de fibre recherchée : entre 1 à 3 min.

On décrit maintenant le procédé et l'installation de mélange du matériau fibreux incorporant les fibres décrites précédemment selon le premier, le deuxième ou le troisième mode de réalisation, et du matériau pâteux alimentaire à base de poisson. L'effet multitexture est obtenu par mélange du matériau pâteux texturé et des fibres.

Dans ce texte, on désigne ce matériau pâteux également indifféremment par le terme matrice alimentaire ; le matériau pâteux après mélange constitue en effet une matrice ou mêlée de liaison englobant les fibres individualisées et/ou en amas réparties de manière essentiellement aléatoire. Sur un produit fini tel que représenté en figure 5, après mélange, la texture globale est à la fois ferme pour le croquant et souple pour son caractère malléable et fondant.

Les produits obtenus apportent une richesse de perception sensorielle non connue de l'auteur à ce jour. Cette sensation, directement liée à la texture hétérogène, est rendue par une partie moelleuse facilement dispersive en bouche qui libère les fibres, fermes et élastiques, dont la perception est croissante au cours de la mastication. Sur des produits obtenus représentés en figure 5 par exemple on peut par déchirement manuel mettre en évidence des fibres.

La multitexture ou texture hétérogène est obtenue notamment grâce à une étape dite de texturation. Sans cette texturation, les fibres incorporées à la matrice alimentaire ne sont pas distinguées de façon aussi nette en bouche. Toutefois, même sans cette texturation, un mélange des matériaux pâteux et fibreux est possible. Le produit comprend alors une matrice, moins moelleuse qu'avec texturation, et des ultrafibres dont le caractère extrêmement fin est moins bien perçu en bouche.

La matrice alimentaire est habituellement crue avant le mélange avec les fibres, mais peut être cuite si sa composition, notamment sa teneur en graisse, permet le mélange. La texturation est réalisée typiquement par des technologies de type homogénéisation, émulsification et/ou foisonnement, et/ou cutterage. La matrice alimentaire est texturée habituellement à l'état cru.

Selon une réalisation, la texturation est effectuée sur le matériau pâteux, avant le mélange avec les fibres. Le matériau pâteux peut être obtenu à partir d'une pâte de poisson comprenant : entre 30 et 60 % de chair de poisson, entre 25 et 40 % d'eau, entre 5 et 15 % d'épaississants comme par exemple l'amidon ou la fécule. A ces principaux ingrédients, peuvent également se rajouter des gélifiants comme les carraghénannes, le xanthane, la gélatine ou des farines de guar...

La densité de cette pâte est ensuite réduite par incorporation, d'une part d'air pour une part de pâte de poisson, ou de 0,5 part d'air pour une part de pâte de poisson. La part d'air peut varier de 0,5 à 1, ce qui permet d'obtenir des textures différentes (plus ou moins aérées). Le mélange intime de l'air et de la pâte de poisson permet d'obtenir une nouvelle texture de pâte souple, légère, élastique, fondante.

La qualité du mélange dépend des paramètres d'incorporation de l'air, à savoir la pression et la contre pression dans la tête de mélange, le dimensionnement et la vitesse de la tête de mélange. En pratique, le régulateur de la pression de la tête mélangeuse est à positionner entre 3 et 5,5 bars, ce qui détermine automatiquement la pression de la tête correspondante : la pression d'entrée doit être de l'ordre de 5 à 6 bars. La vitesse de la tête est à régler entre 25 et 50 Hz.

Selon une autre réalisation, la texturation est effectuée sur le mélange matrice alimentaire et fibres. Le mélange obtenu est aéré avec 0,3 à 1 part d'air pour 1 part de mélange sachant que le mélange peut entraîner déjà en soi une incorporation d'air. Les fibres, bien que subissant un traitement mécanique, conservent toutes leurs propriétés originelles.

On peut mélanger au matériau pâteux des fibres fines et/ou des ultrafibres et/ou des fibres naturelles. Le matériau pâteux et le matériau fibreux sont en partie d'origine marine.

Par exemple on mélange 0,85 à 0,4 part en poids du matériau pâteux décrit ci-dessus, à 0.05 à 0.5. part en poids de fibres fines, et 0,05 à 0,6 part en poids d'ultra fibres.

Un taux d'incorporation de fibres de l'ordre de 5% permet d'apporter une « charpente » au matériau pâteux et évite le phénomène d'affaissement et de modification des formes réalisées à partir du mélange matériau fibreux/matériau pâteux. L'effet maximum est obtenu pour des taux d'incorporation des fibres de 60%.

La texturation a lieu sur une plage de température de 0 à 20°C.

Les fibres peuvent être intégrées telles quelles ou sous forme de préparation à base de fibres. Cette préparation à base de fibres peut être composée par exemple de 75 % de fibres et de 25 % de chair de poisson ou par exemple de 70 % de fibres, 25 % de chair de poisson, 5 % de matières grasses végétales.

Par ailleurs, la formulation de départ comme on l'a décrit contient des ingrédients spécifiques permettant d'obtenir un matériau pâteux qui a des propriétés de résistance à la déformation lors des opérations de moulage/démoulage et cuisson des formes formées, étapes décrites plus loin. Par exemple on peut utiliser des amidons prégélatinisés, des matières grasses végétales à point de fusion élevé, des carraghénanes, des alginates, différentes farines.

On décrit maintenant le procédé et l'installation de mise en forme des produits à texture hétérogène, par exemple tels que représentés en figure 5, après le mélange du matériau fibreux et du matériau pâteux.

La mise en forme du produit peut être réalisée sur une plage de température de 0 à 20°C par :
- extrusion du mélange de la matrice alimentaire et des fibres à température entre 0 et 5°C, la filière permettant l'extrusion pouvant être de forme variée (buse, vis...) en fonction de la forme produit souhaitée ;
- coextrusion du mélange de la matrice alimentaire et des fibres d'une part et d'une autre préparation alimentaire (type sauce, légumes, préparation à base de poisson ou de viande) d'autre part, permettant la réalisation de formes variées : bouchées, étoiles, autres formes ludiques, croissants..., la coextrusion ayant lieu à des températures de l'ordre de 0 à 5°C ;
- moulage en moules souples à température de 1 à 6°C ;
- moulage mécanique sur mouleuse, selon un système de gavage du moule par densité et éjection des formes obtenues par expulsion soit d'air soit d'un mélange air/liquide aidant au démoulage (eau, huile...) à travers les pores du moule.

La coloration du produit peut être réalisée avant ou après stabilisation de la forme du produit par :
- dépose de la coloration sur le produit par extrusion, à travers une filière de forme déterminée en fonction de l'aspect de couleur à obtenir du colorant à une température de l'ordre de -1 à 5°C ;
- dépose de la coloration sur le produit par l'intermédiaire d'une bande de tissu ou d'un pinceau imbibé de colorant, la dépose du colorant étant réalisée grâce au contact du pinceau ou du morceau de tissu alimentaire avec la surface à colorer ;
- projection sur le produit de colorant par un procédé utilisant des disques rotatifs : une pompe gave des disques tournant à grande vitesse (1500 à 3000 Hz), la force centrifuge ainsi développée projette le colorant à la périphérie des disques et le disperse en fines particules de diamètre d'autant plus fin que la vitesse de rotation est grande ;
- micro pulvérisation à basse pression de colorant par l'intermédiaire de buses munies d'une arrivée d'air permettant d'éclater le colorant en micro gouttelettes.

La fixation de la coloration peut se faire par :
- passage en four 2 à 3 min à 85-90°C ;
- passage sous brûleurs à 800-900°C pendant un temps inférieur à 1 min. Par exemple, le passage 15 à 20 secondes sous une lampe IR de 1 KW permet cette fixation.

La stabilisation de la forme du produit peut se faire par :
- gélification à froid par exemple en incorporant de 1 à 5 % d'alginates dans la pâte de poisson de départ et en pulvérisant la forme obtenue d'une solution de chlorure de calcium à concentration de 1 à 3 % ;
- cuisson en moules en four vapeur 10 à 20 min à 80-90°C ;
- cuisson en bain-marie de 2 à 5 min à 95°C ;
- cuisson en four vapeur en continu par exemple 3 minutes à 85°C.

On cite maintenant quelques exemples d'applications des produits obtenus grâce au mélange de matériau pâteux et de matériau fibreux.
Exemple 1 : petites formes ludiques obtenues après moulage et cuisson d'une pâte composée de 40 % d'une préparation de base d'ultrafibres, (comprenant 70% d'ultrafibres par exemple) 44 % de chair de poisson, 6 % d'eau, 5 % d'amidon, 3 % de matières grasses végétales, 1,5 % de sel, 0,5 % d'arôme ; ces petites formes pouvant être de poids inférieur à 20g.
Exemple 2 : petites formes ludiques obtenues après coextrusion et cuisson d'une pâte composée de 40 % d'une préparation à base d'ultrafibres (comprenant 80% d'ultrafibres par exemple), 44 % de chair de poisson, 6 % d'eau, 5 % d'amidon, 3 % de matières grasses végétales, 1,5 % de sel, 0,5 % d'arôme, et d'une base type sauce hollandaise ou provençale en guise de fourrage.
Exemple 3 : steak de poisson nature ultra fibré obtenu après mise en forme dans une formeuse à steak et cuisson d'une pâte de 50 % d'ultrafibres sur support (support : 75 % d'ultrafibres, 25 % de chair de poisson par exemple), 40 % de chair de poisson, 1 % de sel, 5 % d'eau, 1 % d'arôme, 3 % d'amidon.
Exemple 4 : steak de poisson fibré aux fines herbes, aux herbes de Provence, au poivre, au piment, aux échalotes, ..., obtenu en rajoutant 0,5 % d'un mélange d'épices et/ou d'aromates dans la préparation.
Exemple 5 : palet à base de poisson et de petits légumes, obtenu à partir de 30 % de petits légumes, 21 % de fibres, 22,5 % de chair de poisson, 6 % d'amidon, 0,5 % d'arôme, 1 % de sel, 15 % d'eau, 2 % de matières grasses végétales, 2 % de liants, selon les étapes :
   - mélange des petits légumes à la matrice fibrée et texturée en pétrin pendant 5min;
   - mise en formes par mouleuse à steak ;
   - cuisson au four 15 min à 90°C.
Exemple 6 : bâtonnets fourrés obtenus par coextrusion et cuisson :
   - d'une pâte composée par exemple de 46 % de chair de poisson, 37 % d'eau, 12 % d'amidon, 3 % de sel, 2 % d'arôme constituant le fourrage ;
   - et d'une pâte composée de 30 % de fibres, 45 % de chair de poisson, 15 % d'eau, 5 % d'amidon, 3 % de matières grasses végétales, 1,5 % de sel, 0,5 % d'arôme constituant l'enveloppe.
Exemple 7 : quiches et tourtes : pâte brisée garnie d'un mélange fibres + matériau pâteux, 5 % de crème fraîche, 2 % de lait, 2 % de farine, 1 % de sel.
Exemple 8: tranches fines fibrées composées d'une matrice alimentaire obtenue à partir de fibres (30%) et d'une pâte de poisson (70%), comprenant 42 % de chair de poisson, 35 % d'eau, 3 % de matières grasses végétales, 1,5 % de sel, 1,5 % d'arôme, 11 % d'amidon, 6 % de blanc d'oeuf. Les tranches sont ovoïdes de 3 mm d'épaisseur pour un diamètre de 10 cm.
Exemple 9 : bâtonnets fibrés fourrés au fromage obtenus par mélange d'une pâte composée de 30 % de fibres, 45 % de chair de poisson, 15 % d'eau, 5 % d'amidon, 3 % de matières grasses végétales, 1,5 % de sel, 0,5 % d'arôme, d'une part, et de fromage fondu en guise de fourrage d'autre part ; l'ensemble étant gélifié par chauffage à 90°C 15 min.
Exemple 10 : rillettes de poisson obtenues en mélangeant 30% de matrice alimentaire texturée, 25% de fibres sur support, 15% d'eau, 15% de matières grasses végétales, 3% de matières grasses laitières, 3% de sel, 3% d'amidon, 2% de protéines de lait, 2% d'un mix épaississant (comprenant farine de guar et xanthane), 2% d'arôme.
Exemple 11 : pâte de poisson tartinable composée de 50% de mélange fibres + matériau pâteux texturé (en proportion 40-60 respectivement), 20% d'eau, 14% de matières grasses laitières, 10% d'amidon, 2% de poudre de lait écrémé, 3% de sel, 1% d'arôme.
Exemple 12 : crème de poisson composée de 43% de matières grasses végétales, 50% de mélange fibres + matériau pâteux texturé (en proportion 50-50 respectivement), 2% de sel, 3% d'épaississant, 2% d'arôme.
Exemple 13 : terrine de poisson fibrée composée 30% de mélange fibres + matériau pâteux texturé (en proportion 30-70 respectivement), 25% d'eau, 15% d'oeuf, 15% d'huile végétale, 10% de fécule de pomme de terre, 2% de farine de guar, 2% de sel, 1% d'arôme.

## Revendications

1. Procédé d'obtention d'un produit alimentaire à base de poisson, **caractérisé en ce qu'**il comprend les étapes suivantes :
- fabrication d'un matériau pâteux,
- comportant plus de 30% de chair de poisson lavée et raffinée, apte à la gélification, notamment additionnée d'agents stabilisants du type cryoprotecteurs en vue de sa conservation par congélation, et d'une humidité intérieure à 80% ; et
- étant, le cas échéant, enrichi d'épaississant ou gélifiant à froid de manière à avoir une force de gel de 100 à 250 g/cm² avant texturation.
ledit matériau pâteux étant texturé par incorporation d'air ;
- fabrication d'un matériau fibreux, ledit matériau fibreux incorporant des fibres ayant un diamètre compris entre 1 µm et 1 mm isolées ou en amas ;
- mélange du matériau fibreux avec le matériau pâteux ;
- mise en forme du mélange ;
de sorte à obtenir un produit alimentaire présentant une texture hétérogène et une consistance globale ferme et élastique, se rapprochant des muscles de poissons ou de crustacés.

2. Procédé selon la revendication 1, **caractérisé en ce que** le matériau pâteux est texturé typiquement par incorporation d'air par des technologies de type homogénéisation, émulsification, et/ou foisonnement et/ou cuttérage, avant le mélange avec le matériau fibreux, à raison de 0,5 part à 1 part d'air pour une part de matériau pâteux, pour avoir une force de gel de 5à à 150 g/cm², ou après le mélange par incorporation de 0,3 à 1 part d'air pour une part de mélange.

3. Procédé selon la revendication 1 ou 2, **caractérisé en ce que** le matériau fibreux comprend des fibres ramifiées en réseau obtenues à partir de chair hachée de poisson, par un procédé de cuisson extrusion à haute température et humidité élevée comprenant les étapes suivantes :
a. introduction de la chair de poisson dans un extrudeur à vis ;
b. transfert de la chair de l'amont vers l'aval du fourreau de l'extrudeur, la configuration des vis et la température à l'intérieur du fourreau de l'amont vers l'aval étant adaptée pour faire subir aux matières premières successivement une étape de malaxage et de chauffage de la matière jusqu'à une température de 130°C, puis une étape de fusion et de montée en température et en pression au-delà de 130°C, généralement entre 140 et 200°C, et entre 0 et 50 bars, de manière à obtenir la plastification de la matière transférée ;
c. extrusion, à l'extrémité aval du fourreau, de la matière obtenue après plastification, à travers une filière adaptée à texturer, à mettre en forme et à refroidir la matière, de manière à obtenir un produit présentant une texture fibrée ramifiée.

4. Procédé selon la revendication 3, **caractérisé en ce que** le refroidissement de la matière extrudée se fait dans la filière jusqu'à une température de 100°C, voire moins, entre 80°C et 30°C, et comprend un premier refroidissement dans une zone non refroidie de la filière en sortie du fourreau puis un second refroidissement dans une zone refroidie de la filière.

5. Procédé selon la revendication 3 ou 4, **caractérisé en ce que** le matériau fibreux obtenu en sortie de filière est refroidi par douchage froid, tranché à la longueur désirée puis défibré en fibres, les fibres extrudées produites en amas étant coupées et séparées de façon à pouvoir les disperser dans une matrice alimentaire à base de poisson par cuttérage, hachage, laminage, pétrissage, homogénéisation.

6. Procédé selon l'une quelconque des revendications 3 à 5, **caractérisé en ce que** le mélange extrudé contient de 15 à 50% de matière sèche, notamment 25 à 40 %, cette matière sèche comprenant au moins 35 % de protéines totales.

7. Procédé selon la revendication 6, **caractérisé en ce que** 25 à 100% de la matière sèche du mélange extrudé sont constitués de la matière sèche issue de poisson et/ou autres produits marins comprenant essentiellement des protéines marines sous forme de hachis, de filets, de pulpes, d'extraits de surimi, et le cas échéant des extraits marins du type huile de poisson, de la poudre d'arêtes de poisson, de la poudre de carapaces de crustacés, du chitosane, du collagène de poisson.

8. Procédé selon la revendication 7, **caractérisé en ce que** la matière sèche du mélange extrudé comprend, en complément de la matière sèche issue de poisson, des protéines fonctionnelles de lait, comme les protéines de lactosérum, les caséines et/ou les caséinates, ces protéines fonctionnelles de lait étant sous forme séchée et/ou concentrée.

9. Procédé selon la revendication 7 ou 8, **caractérisé en ce que** le mélange extrudé comprend en outre des protéines d'oeuf sous forme liquide ou pulvérulentes, des matières grasses végétales ou laitières, des protéines végétales concentrées ou isolées, des farines végétales, des amidons et autres glucides complexes, des hydrocolloïdes alimentaires, des épices, des arômes ou des colorants.

10. Procédé selon l'une quelconque des revendications 3 à 9, **caractérisé en ce que** les fibres extrudées sont utilisées fraîches, ou conservées par un traitement physique de type surgélation pasteurisation ou stérilisation notamment.

11. Procédé selon l'une quelconque des revendications 1 à 10, **caractérisé en ce que** le matériau fibreux comprend des fibres fines obtenues à partir d'une préparation à base de poisson selon les étapes suivantes :
- mélange des ingrédients de la préparation à base de poisson ;
- mise en forme de la préparation à base de poisson ;
- mise en forme et cuisson de la préparation à base de poisson permettant la gélification ;
- refroidissement ;
- réduction dimensionnelle de la préparation à base de poisson cuite de type découpe et râpage.

12. Procédé selon la revendication 11, **caractérisé en ce que** la préparation à base de poisson pour la fabrication des fibres fines comporte plus de 50% de chair de poisson lavée et raffinée, apte à la gélification, notamment additionnée d'agents stabilisants du type cryoprotecteurs en vue de sa conservation par congélation, et d'une humidité inférieure à 80%, la préparation à base de poisson étant éventuellement enrichie de gélifiants ou d'épaississants de manière à avoir une force de gel de 150 à 300 g/cm².

13. Procédé selon l'une quelconque des revendications 1 à 12, **caractérisé en ce que** le matériau fibreux comprend des fibres naturelles cuites ou crues de poisson, de crabe ou d'autres produits de la mer, obtenues par traitement mécanique de séparation utilisant typiquement un malaxeur, et un cylindre rotatif équipé d'un peigne.

14. Procédé selon l'une quelconque des revendications 1 à 13, **caractérisé en ce que** le taux d'incorporation du matériau fibreux dans le matériau pâteux est compris entre 5 et 60 % en poids, en fonction du résultat de texture désirée, et typiquement entre 5 et 30%.

15. Procédé selon l'une quelconque des revendications 1 à 14, **caractérisé en ce que** le mélange a lieu à une température comprise entre -10°C et +20°C.

16. Procédé selon l'une quelconque des revendications 1 à 15, **caractérisé en ce que** le matériau fibreux mélangé au matériau pâteux comprend au moins un type de fibres choisi dans le groupe comprenant les fibres en réseau ramifiées, les fibres fines, les fibres naturelles.

17. Procédé selon l'une quelconque des revendications 1 à 16, **caractérisé en ce que** les fibres sont de même couleur ou de couleur différente du matériau pâteux.

18. Procédé selon l'une quelconque des revendications 1 à 17, **caractérisé en ce que** les fibres sont incorporées selon un mode statique, notamment dans un pétrin ou une cuve de mélange, ou selon un mode dynamique, notamment dans un mélangeur en ligne.

19. Procédé selon l'une quelconque des revendications 1 à 18, **caractérisé en ce que** le fondant du matériau pâteux est régulé en fonction du taux de matières grasses de 0 à 50%.

20. Procédé selon une quelconque des revendications 1 à 19, **caractérisé en ce que** la pâte obtenue par mélange des fibres et du matériau pâteux alimentaire subit les étapes de :
- mise en forme, par extrusion ou par moulage ; en formes bidimensionnelles ou tridimensionnelles, ou sous forme d'une bande ;
- cuisson, permettant la gélification et la stabilisation de la forme du produit ;
- refroidissement.

21. Procédé selon la revendication 20, **caractérisé en ce que** les formes obtenues peuvent ou non recevoir une coloration de surface, réalisées sur les formes crues et/ou après l'étape de cuisson selon un procédé de pulvérisation, de dépôt sur bande, ou d'extrusion de matériau pâteux coloré.

22. Procédé selon la revendication 20 **caractérisé en ce que** l'étape de cuisson comprend en combinaison une étape de cuisson micro ondes et une étape de cuisson vapeur, la cuisson micro ondes permettant essentiellement la cuisson rapide à coeur du produit de manière à obtenir une structure de type gel suffisamment stable avant refroidissement, et la cuisson vapeur permettant la cuisson essentiellement en surface sans dessèchement du produit, la cuisson micro ondes étant réalisée avant ou simultanément avec la cuisson vapeur.

23. Produit alimentaire à base de poisson susceptible d'être obtenu par le procédé selon l'une des revendications 1 à 22, comprenant un matériau pâteux aéré par texturation et un matériau fibreux, **caractérisé en ce que** le matériau fibreux, susceptible d'être obtenu par cuisson extrusion, forme un réseau de fibres macroscopiques d'un diamètre compris entre 0,1 mm et 1 mm ramifiées en fibres microscopiques d'un diamètre compris entre 1 µm et 0,1 mm.

24. Produit alimentaire à base de poisson susceptible d'être obtenu par le procédé selon l'une des revendications 1 à 22, comprenant un matériau pâteux aéré par texturation et un matériau fibreux, **caractérisé en ce que** le matériau fibreux comprend des fibres fines d'un diamètre compris entre 0,1 mm et 1 mm, susceptible d'être obtenues par réduction dimensionnelle d'une préparation à base de poisson, ou issues de fibres naturelles de produits de la mer issues d'un traitement mécanique de séparation des myotomes.

25. Produit selon l'une quelconque des revendications 23 et, **caractérisé en ce qu'**il comprend plus de 30% de chair de poisson, notamment entre 30 et 60 %, et 25 à 40 % d'eau, et se présente en formes bidimensionnelles ou tridimensionnelles de type bandes fines, cylindres, terrine ou pain de poisson ou autres formes ludiques, le cas échéant colorées.

26. Produit selon la revendication 25, **caractérisé en ce que** les formes ont une dimension de 1 à 12 cm et un poids de 3 à 300 g, typiquement 3 à 20 g.

27. Préparation alimentaire à base de poisson incorporant un produit selon la revendication 23 ou 24, le matériau pâteux comportant plus de 30 % de chair de poisson, la préparation étant de type steak de poisson, palet à base de poisson et légumes, bâtonnet fourré, quiche, tourte, tranche fine, pâte tartinable, rillettes de poisson, crème de poisson, petites formes ludiques.

## Claims

1. Method of obtaining a fish-based food product, **characterised in that** it comprises the following steps:
- manufacturing a doughy material comprising more than 30% of washed and refined fish flesh that is suitable for gelling, in particular with added stabiliser agents such as cryoprotectants with a view to preserving it by freezing, and less than 80% of moisture; and being, when applicable, enriched with a thickener or cold gelling agent in order to have a gel strength of 100 to 250 g/cm² prior to texturisation, said doughy material being texturised by the inclusion of air;
- manufacturing a fibrous material, said fibrous material including isolated or bundled fibres with a diameter comprised between 1 µm and 1 mm;
- mixing the fibrous material with the doughy material;
- shaping the mixture;
in order to obtain a food product that has an even texture and a firm, elastic overall consistency that is similar to that of the muscles of fish or crustaceans.

2. Method according to claim 1, **characterised in that** the doughy material is typically texturised by the inclusion of air using technologies such as homogenisation, emulsification and/or over-running and/or cuttering, prior to mixing with the fibrous material, at a rate of 0.5 to 1 part of air per part of doughy material, in order to obtain a gel strength of 50 to 150 g/cm2, or after mixing by inclusion of 0.3 to 1 part of air per part of mixture.

3. Method according to claim 1 or 2, **characterised in that** the fibrous material comprises networked branching fibres obtained from minced fish flesh, by means of a cooking process using extrusion at a high temperature and a high rate of moisture, comprising the following steps:
a. insertion of the fish flesh in a screw extruder;
b. transferring the flesh downstream inside the sleeve of the extruder, the configuration of the screws and the temperature inside the sleeve in the downstream direction being adapted to cause the raw materials to be subjected successively to a step of kneading and heating of the material until a temperature of 130°C, followed by a step of fusion and increasing the temperature and pressure beyond 130°C, generally between 140°C and 200°C and between 0 and 50 bars, so as to achieve the plasticization of the transferred material;
c. extrusion, at the downstream end of the sleeve, of the material obtained after plasticization, through a die adapted in order to texturise, shape and cool the material, so as to obtain a product with a branched fibrous texture.

4. Method according to claim 3, **characterised in that** the extruded material is cooled in the die until it reaches a temperature of 100°C or less, between 80°C and 30°C, and comprises a first step of cooling in a non-chilled area of the die at the output of the sleeve followed by a second step of cooling in a chilled area of the die.

5. Method according to claim 3 or 4, **characterised in that** the fibrous material obtained at the output of the die is cooled by quenching, cut to the desired length and then defibrated into fibres, the extruded fibres produced in bundles being cut and separated so as to be able to disperse them in a fish-based food mixture by cuttering, mincing, flaking, mixing or homogenisation.

6. Method according to any one of the claims from 3 to 5,
**characterised in that** the extruded mixture contains 15% to 50% of solids, in particular 25% to 40%, these solids comprising at least 35% of the total proteins.

7. Method according to claim 6, **characterised in that** 25% to 100% of the solids of the extruded material consist of solids obtained from fish and/or other seafood products, essentially comprising seafood proteins in the form of mince, fillets, pulp, surimi extracts and, when applicable, seafood extracts such as fish oil, fish bone powder, crustacean shell powder, chitosan or fish collagen.

8. Method according to claim 7, **characterised in that** the solids of the extruded mixture comprise, in addition to solids from fish, functional milk proteins such as whey protein, caseins and/or caseinates, these functional milk proteins being in dried and/or concentrated form.

9. Method according to claim 7 or 8, **characterised in that** the extruded mixture also comprises liquid or powdered egg protein, vegetable or milk fat, concentrated or isolated vegetable protein, vegetable flour, starches and other complex carbohydrates, edible hydrocolloids, spices, flavourings and colouring agents.

10. Method according to any one of the claims from 3 to 9,
**characterised in that** the extruded fibres are used fresh, or preserved by means of a physical treatment, in particular such as quick-freezing, pasteurisation or sterilisation.

11. Method according to any one of the claims from 1 to 10,
**characterised in that** the fibrous material comprises fine fibres obtained from a fish-based preparation according to the following steps:
- mixing the ingredients of the fish-based preparation;
- shaping the fish-based preparation;
- shaping and cooking the fish-based preparation, allowing it to gel;
- cooling;
- reducing the size of the cooked fish-based preparation by means of cutting and grating.

12. Method according to claim 11, **characterised in that** the fish-based preparation for manufacturing fine fibres comprises more than 50% of washed and refined fish flesh that is suitable for gelling, in particular with added stabiliser agents such as cryoprotectants with a view to preserving it by freezing, and less than 80% of moisture; and being, when applicable, enriched with a thickener or cold gelling agent in order to have a gel strength of 150 to 300 g/cm².

13. Method according to any one of the claims from 1 to 12, **characterised in that** the fibrous material comprises cooked or raw natural fibres of fish, crab or other seafood products, obtained by a mechanical separation process typically using a mixer and a rotating cylinder equipped with a comb.

14. Method according to any one of the claims from 1 to 13, **characterised in that** the rate of inclusion of the fibrous material in the doughy material is comprised between 5% and 60% in weight, according to the desired texture result, and typically between 5% and 30%.

15. Method according to any one of the claims from 1 to 14, **characterised in that** the mixing is performed at a temperature comprised between -10°C and +20°C.

16. Method according to any one of the claims from 1 to 15, **characterised in that** the fibrous material mixed with the doughy material comprises at least one type of fibres chosen from the group that comprises branched networked fibres, fine fibres and natural fibres.

17. Method according to any one of the claims from 1 to 16, **characterised in that** the colour of the fibres is the same as or different from that of the doughy material.

18. Method according to any one of the claims from 1 to 17, **characterised in that** the fibres are included by means of a static method, in particular in a kneading machine or a mixing kettle, or a dynamic method, in particular in a line mixer.

19. Method according to any one of the claims from 1 to 18, **characterised in that** the flux of the doughy material is adjusted according to the fat content from 0% to 50%.

20. Method according to any one of the claims from 1 to 19,
**characterised in that** the paste obtained by mixing the fibres and the doughy food material undergoes the steps of:
- shaping by extrusion or moulding, in two- or three-dimensional shapes, or in the shape of a strip;
- cooking, allowing the shape of the product to gel and stabilise;
- cooling.

21. Method according to claim 20, **characterised in that** the shapes obtained may or may not receive surface colouring, carried out on the raw shapes and/or after the cooking step using a process of spraying, depositing on the strip or extruding the coloured doughy material.

22. Method according to claim 20, **characterised in that** the cooking step comprises a combination of a microwave cooking step and a steam cooking step, the microwave cooking essentially allowing the quick cooking of the centre of the product in order to obtain a gel-type structure that is sufficiently stable prior to cooling, and the steam cooking essentially allowing the cooking of the surface without drying out the product, the microwave cooking being performed prior to or simultaneously with the steam cooking.

23. Fish-based food product that can be obtained by means of the method according to any one of the claims from 1 to 22, comprising a doughy material aired by texturisation and a fibrous material, **characterised in that** the fibrous material, which can be obtained by extrusion cooking, forms a network of macroscopic fibres with a diameter comprised between 0.1 mm and 1 mm, which branch into microscopic fibres with a diameter comprised between 1 µm and 0.1 mm.

24. Fish-based food product that can be obtained by means of the method according to any one of the claims from 1 to 22, comprising a doughy material aired by texturisation and a fibrous material, **characterised in that** the fibrous material comprises fine fibres with a diameter comprised between 0.1 mm and 1 mm, which can be obtained by dimensional reduction of a fish-based preparation, or which can result from the natural fibres of seafood products that result from a mechanical process of separation of myotomes.

25. Product according to either one of the claims 23 or 24,
**characterised in that** it comprises more than 30% of fish flesh, in particular between 30% and 60%, and 25% to 40% of water, and is presented in two- or three-dimensional shapes such as fine strips, cylinders, terrines or fish bread or other fun shapes, coloured when applicable.

26. Product according to claim 25, **characterised in that** the shapes have a size of 1 to 12 cm and a weight of 3 to 300 g, typically 3 to 20 g.

27. Fish-based food preparation including a product according to claim 23 or 24, the doughy material comprising more than 30% of fish flesh, the preparation being such as fish steak, fish and vegetable patty, fish finger, quiche, pie, thin slice, spreadable paste, potted fish, cream of fish soup or small fun shapes.

## Patentansprüche

1. Verfahren zur Herstellung eines Lebensmittelprodukts auf Fischbasis, **dadurch gekennzeichnet, daß** es folgende Schritte umfaßt:
- Herstellung eines teigigen Materials,
- das über 30% gewaschenes und verfeinertes Fischfleisch enthält, das für die Gelierung geeignet ist, dem insbesondere Stabilisatoren vom Typ Tieftemperaturschutz für seine Konservierung durch Einfrieren zugesetzt wurden, und eine Feuchtigkeit von unter 80%;
- das gegebenenfalls mit einem Dickmittel oder Kältegeliermittel angereichert wurde, damit vor der Texturierung eine Gefrierkraft von 100 bis 250 g/cm² anliegt, wobei das Teigmaterial durch Lufteinschluß texturiert wird;
- Herstellung eines faserigen Materials, wobei das besagte faserige Material Fasern mit einem Querschnitt zwischen 1 µm und 1 mm umschließt, die einzeln oder gehäuft vorhanden sind;
- Mischung des faserigen Materials mit dem teigigen Material;
- Formgebung der Mischung,
so daß ein Lebensmittelprodukt erzielt wird, das eine uneinheitliche Textur und eine feste und elastische Gesamtbeschaffenheit aufweist, die sich derjenigen der Muskeln von Fischen und Krustentieren annähert.

2. Verfahren nach Anspruch 1, **dadurch gekennzeichnet, daß** das Teigmaterial typischerweise mit Lufteinschluß mit Techniken von der Art Homogenisation, Emulgieren und/oder Treiben und/oder Zerkleinern texturiert wird, bevor es mit dem faserigen Material gemischt wird, mit 0,5 bis 1 Teil Luft für ein Teil teigiges Material, damit eine Gefrierkraft von 5 bis 150 g/cm² erreicht wird, oder nach dem Mischen durch Einschluß von 0,3 bis 1 Teil Luft für ein Teil Mischung.

3. Verfahren nach Anspruch 1 oder 2, **dadurch gekennzeichnet, daß** das faserige Material netzartig verzweigte Fasern umfaßt, die ausgehend von gehacktem Fischfleisch erzielt werden, nämlich mit einem Koch- und Extrusionsverfahren bei hoher Temperatur und hoher Feuchte, das folgende Schritte umfaßt:
a. Einführung des Fischfleisches in eine Schneckenstrangpresse;
b. Transfer des Fischfleisches von vor nach hinter der Hülse der Strangpresse, wobei die Konfiguration der Schnecken und die Temperatur in der Hülse von oben nach unten so angepaßt sind, damit die Rohstoffe nacheinander eine Etappe Durchkneten und Erwärmung des Materials bis zu einer Temperatur von 130°C durchlaufen, dann eine Etappe mit Schmelzung und Temperatur- und Druckanstieg über 130°C hinaus, im allgemeinen zwischen 140° und 200°C und zwischen 0 und 50 Bar, damit das Weichmachen des transferierten Materials erzielt wird;
c. Extrusion am unteren Ende der Hülse des nach dem Weichmachen erzielten Materials, durch ein Spritzmundstück, das für das Texturieren, das Formen und das Kühlen des Materials geeignet ist, damit ein Produkt hergestellt wird, das eine Textur mit verzweigten Fasern aufweist.

4. Verfahren nach Anspruch 3, **dadurch gekennzeichnet, daß** die Kühlung des stranggepreßten Materials im Spritzmundstück bis zu einer Temperatur von 100°C oder sogar darunter, zwischen 80°C und 30°C, erfolgt und eine erste Kühlung in einer ungekühlten Zone des Spritzmundstücks am Ausgang der Hülse umfaßt, und dann eine zweite Kühlung in einer gekühlten Zone des Spritzmundstücks.

5. Verfahren nach Anspruch 3 oder 4, **dadurch gekennzeichnet, daß** das am Ausgang des Spritzmundstücks erzielte faserige Material durch Kaltduschen abgekühlt, in der gewünschten Länge abgeschnitten und dann in Fasern zerfasert wird, wobei die gehäuft erzeugten stranggepreßten Fasern geschnitten und so getrennt werden, daß sie in einer Lebensmittelmatrix auf Fischbasis durch Zerkleinern, Hacken, Walzen, Kneten, Homogenisieren verstreut werden können.

6. Verfahren nach einem beliebigen der vorstehenden Ansprüche 3 bis 5, **dadurch gekennzeichnet, daß** die stranggepreßte Mischung 15 bis 50% Trockenmasse enthält, insbesondere 25 bis 40%, wobei diese Trockenmasse mindestens 35% Gesamtproteine enthält.

7. Verfahren nach Anspruch 6, **dadurch gekennzeichnet, daß** 25 bis 100% der Trockenmasse des stranggepreßten Materials aus der Trockenmasse bestehen, die aus Fisch und/oder anderen Meereserzeugnissen hervorgegangen ist, die im wesentlichen Meeresproteine in Form von Gehacktem, Filets, Pulpen, Surimiextrakten und gegebenenfalls Meeresextrakte von der Art Fischöl, Fischgrätenpulver, Pulver aus den Krusten von Krustentieren, Chitosan und Fischcollagen enthalten.

8. Verfahren nach Anspruch 8, **dadurch gekennzeichnet, daß** die Trockenmasse der stranggepreßten Mischung ergänzend zur aus Fisch hervorgegangenen Trockenmasse auch funktionale Milchproteine enthält, wie Molkeproteine, Kaseine und/oder Kaseinate, wobei diese funktionalen Milchproteine in getrockneter und/oder konzentrierter Form vorhanden sind.

9. Verfahren nach Anspruch 7 oder 8, **dadurch gekennzeichnet, daß** die stranggepreßte Mischung außerdem Eiproteine in flüssiger oder gepulverter Form enthält, sowie pflanzliche oder Milchfettstoffe, konzentrierte oder isolierte Pflanzenproteine, Pflanzenmehle, Stärken und andere komplexe Kohlehydrate, Lebensmittel-Hydrokolloide, Gewürze, Aromastoffe oder Farbstoffe.

10. Verfahren nach einem beliebigen der vorstehenden Ansprüche 3 bis 9, **dadurch gekennzeichnet, daß** die stranggepreßten Fasern frisch oder mit einer physischen Behandlung konserviert verwendet werden, wie insbesondere das Einfrieren, die Pasteurisierung oder die Sterilisation.

11. Verfahren nach einem beliebigen der vorstehenden Ansprüche 1 bis 10, **dadurch gekennzeichnet, daß** das faserige Material feine Fasern enthält, die ausgehend von einer Zubereitung auf Fischbasis nach folgenden Schritten erzielt werden:
- Mischung der Bestandteile der Zubereitung auf Fischbasis;
- Formen der Zubereitung auf Fischbasis;
- Formen und Kochen der Zubereitung auf Fischbasis, was die Gelierung zuläßt;
- Abkühlung;
- Verringerung der Abmessung der Zubereitung auf gekochter Fischbasis von der Art Aufschnitt und Reiben.

12. Verfahren nach Anspruch 11, **dadurch gekennzeichnet, daß** die Zubereitung auf Fischbasis für die Herstellung der feinen Fasern über 50% gewaschenes und verfeinertes Fischfleisch enthält, das für die Gelierung geeignet ist, dem insbesondere Stabilisatoren vom Typ Tieftemperaturschutz für seine Konservierung durch Einfrieren zugesetzt wurden, und eine Feuchtigkeit von unter 80%, wobei die Zubereitung auf Fischbasis eventuell mit Geliermitteln oder Dickmitteln angereichert wurde, damit eine Gefrierkraft von 150 bis 300 g/cm² anliegt.

13. Verfahren nach einem beliebigen der vorstehenden Ansprüche 1 bis 12, **dadurch gekennzeichnet, daß** das faserige Material gekochte oder rohe Naturfasern aus Fisch, Krebs oder anderen Meereserzeugnissen enthält, die durch mechanische Trennungsbearbeitung erzielt werden unter dem typischen Einsatz einer Knetmaschine und eines Drehzylinders mit einem Kamm.

14. Verfahren nach einem beliebigen der vorstehenden Ansprüche 1 bis 13, **dadurch gekennzeichnet, daß** der Einarbeitungssatz des faserigen Materials in das teigige Material gewichtsmäßig zwischen 5% und 60% liegt, und zwar je nach dem gewünschten Texturergebnis, und typischerweise zwischen 5% und 30%.

15. Verfahren nach einem beliebigen der vorstehenden Ansprüche 1 bis 14, **dadurch gekennzeichnet, daß** die Mischung bei einer Temperatur zwischen -10°C und +20°C stattfindet.

16. Verfahren nach einem beliebigen der vorstehenden Ansprüche 1 bis 15, **dadurch gekennzeichnet, daß** das mit dem teigigen Material gemischte faserige Material mindestens eine Faserart enthält, die in der Gruppe gewählt wurde, die verzweigte Fasern im Netz, feine Fasern und Naturfasern enthält.

17. Verfahren nach einem beliebigen der vorstehenden Ansprüche 1 bis 16, **dadurch gekennzeichnet, daß** die Fasern die gleiche Farbe wie das teigige Material haben oder eine andere.

18. Verfahren nach einem beliebigen der vorstehenden Ansprüche 1 bis 17, **dadurch gekennzeichnet, daß** die Fasern nach einem statischen Modus eingearbeitet werden, insbesondere in einer Kentmaschine oder einer Mischwanne, oder nach einem dynamischen Modus, insbesondere in einer Mischmaschine in einer Produktionsstraße.

19. Verfahren nach einem beliebigen der vorstehenden Ansprüche 1 bis 18, **dadurch gekennzeichnet, daß** das Schmelzen des teigigen Materials in Abhängigkeit vom Fettstoffanteil von 0 bis 50% reguliert wird.

20. Verfahren nach einem beliebigen der vorstehenden Ansprüche 1 bis 19, **dadurch gekennzeichnet, daß** der durch Mischung der Fasern und des teigigen Lebensmittelmaterials hergestellte Teig folgende Schritte durchläuft:
- Formen durch Strangpressen oder Gießen; in zweidimensionale oder dreidimensionale Formen oder in Bandform;
- Kochen, was die Gelierung und die Stabilisierung der Form des Produkts zuläßt;
- Abkühlung.

21. Verfahren nach Anspruch 20, **dadurch gekennzeichnet, daß** die erzielten Formen eine Färbung der Oberfläche bekommen können oder nicht, die auf den rohen Formen und/oder nach dem Kochvorgang mit einem Zerstäubungsverfahren, Aufbringung auf dem Band oder Strangpressen von farbigem teigigem Material realisiert wird.

22. Verfahren nach Anspruch 20, **dadurch gekennzeichnet, daß** der Schritt mit dem Kochvorgang eine Etappe mit Kochen im Mikrowellenherd und eine Etappe mit Dampfkochen in Kombination umfaßt, wobei das Kochen im Mikrowellenherd im wesentlichen das rasche Garkochen des Produkts ermöglicht, damit eine gelartige und vor dem Abkühlen ausreichend stabile Struktur erzielt wird, und wobei das Dampfkochen im wesentlichen für das Kochen an der Oberfläche ohne Austrocknen des Produkts sorgt, wobei das Kochen im Mikrowellenherd vor oder gleichzeitig mit dem Dampfkochen erfolgt.

23. Lebensmittelprodukt auf Fischbasis, das mit dem Verfahren nach einem beliebigen der Ansprüche 1 bis 22 hergestellt werden kann, das ein durch Texturierung gelüftetes teigiges Material und ein faseriges Material enthält, **dadurch gekennzeichnet, daß** das faserige Material, das durch Kochen und Strangpressen hergestellt werden soll, ein Netz mit makroskopischen Fasern mit einem Querschnitt von zwischen 0,1 mm und 1 mm bildet, die in mikroskopische Fasern mit einem Querschnitt von 1 µm bis 0,1 mm verzweigt sind.

24. Lebensmittelprodukt auf Fischbasis, das mit dem Verfahren nach einem beliebigen der Ansprüche 1 bis 22 hergestellt werden kann, das ein durch Texturierung gelüftetes teigiges Material und ein faseriges Material enthält, **dadurch gekennzeichnet, daß** das faserige Material feine Fasern mit einem Querschnitt von 0,1 mm bis 1 mm enthält, die durch Verringerung der Abmessung einer Zubereitung auf Fischbasis hergestellt werden können, oder die aus Naturfasern von Meeresprodukten hervorgegangen sind, die eine mechanische Bearbeitung mit Trennung der Myotome durchlaufen haben.

25. Produkt nach einem beliebigen der Ansprüche 23 und 24, **dadurch gekennzeichnet, daß** es über 30% Fischfleisch, insbesondere zwischen 30 und 60%, enthält und 25 bis 40% Wasser und zwei- oder dreidimensionale Formen aufweist, wie feine Bänder, Zylinder, Pastete oder Stück aus Fisch oder andere spielerische Formen, die gegebenenfalls farbig sind.

26. Produkt nach Anspruch 25, **dadurch gekennzeichnet, daß** die Formen eine Abmessung von 1 bis 12 cm und ein Gewicht von 3 bis 300 g haben, typischerweise 3 bis 20 g.

27. Lebensmittelzubereitung auf Fischbasis mit Einschluß eines Produkts nach Anspruch 23 oder 24, wobei das teigige Material über 30% Fischfleisch enthält, wobei die Zubereitung von der Art eines Fischsteaks ist, flaches rundes Teil auf Fischbasis mit Gemüse, gefülltes Stäbchen, Quiche (Kuchen), Blätterteigpastete, feine Scheibe, streichfähige Paste, feingehacktes Fischfleisch (Rillettes), Fischcreme, kleine spielerische Formen.
